# FASCICULE DE BREVET EUROPEEN

(11) **EP 3 918 189 B1**
(45) Date de publication et mention de la délivrance du brevet: **24.04.2024**
(21) Numéro de dépôt: 20706577.2
(22) Date de dépôt: 29.01.2020
(51) Int. Cl.: F02C 7/26, F01D 21/00, F01D 25/34, F02C 7/268

(54) **PROCÉDÉ DE RÉGULATION DE LA DÉFORMATION EN FLEXION D'UN ARBRE DE TURBOMACHINE A L'ARRÊT SOUMIS À LA CHALEUR RÉSIDUELLE DE FONCTIONNEMENT DE LA TURBOMACHINE**
VERFAHREN ZUR REGELUNG DER BIEGEVERFORMUNG EINER TURBOMASCHINENWELLE IM RUHEZUSTAND UNTER EINFLUSS DER RESTWÄRME DES TURBOMASCHINENBETRIEBS
METHOD FOR CONTROLLING THE BENDING DEFORMATION OF A TURBOMACHINE SHAFT AT REST SUBJECTED TO THE RESIDUAL HEAT OF OPERATION OF THE TURBOMACHINE

(30) Priorité: 29.01.2019 FR 1900805
(43) Date de publication de la demande: 08.12.2021
(73) Titulaire: SAFRAN AIRCRAFT ENGINES, 75015 Paris (FR)
(72) Inventeur: GORCE, Clèment, Georges, Henri, 7750 MOISSY-CRAMAYEL (FR); TICHTCHENKO, Emelian, Vsevolod, Evqueny, 7750 MOISSY-CRAMAYEL (FR)
(74) Mandataire: Cabinet Beau de Loménie
(86) Numéro de dépôt international: PCT/FR2020/050137
(87) Numéro de publication internationale: WO 2020/157432

(56) Documents cités:
- FR-A1- 3 007 459
- JP-A- H09 222 001
- US-A1- 2018 010 480
- US-A1- 2018 340 475

## Description

### Domaine Technique

Le présent exposé concerne un procédé de régulation de la déformation en flexion d'un arbre de turbomachine à l'arrêt soumis à la chaleur résiduelle de fonctionnement de la turbomachine.

Le terme « turbomachine » désigne l'ensemble des appareils à turbine à gaz produisant une énergie motrice, parmi lesquels on distingue notamment les turboréacteurs fournissant une poussée nécessaire à la propulsion par réaction à l'éjection à grande vitesse de gaz chauds, et les turbomoteurs dans lesquels l'énergie motrice est fournie par la rotation d'un arbre moteur. Par exemple, des turbomoteurs sont utilisés comme moteur pour des hélicoptères, des navires, des trains, ou encore comme moteur industriel. Les turbopropulseurs (turbomoteur entrainant une hélice) sont également des turbomoteurs utilisés comme moteur d'avion.

On considère qu'une turbomachine est à l'arrêt lorsque la chambre de combustion est éteinte tandis qu'elle est en fonctionnement lorsque la chambre de combustion est allumée.

### Technique antérieure

Les turbomachines telles que les turboréacteurs posent une problématique récurrente de dissipation de la chaleur une fois à l'arrêt. En effet, lors de leur fonctionnement, les turbomachines emmagasinent une quantité importante de chaleur, notamment dans les zones à proximité de leur chambre de combustion, qu'il faut dissiper. En fonctionnement, la rotation du rotor assure une dissipation de cette chaleur. Cependant, une fois la turbomachine à l'arrêt, la dissipation de la chaleur emmagasinée pose plusieurs problématiques.

En effet, la chaleur emmagasinée, notamment dans la chambre de combustion, va naturellement se propager au travers de la turbomachine, et va alors par un phénomène de convection se localiser essentiellement dans la partie supérieure de la turbomachine. Il en résulte une dilatation non homogène des différents composants, et notamment de l'arbre de la turbine haute pression, ce qui entraine un phénomène de flexion de l'arbre que l'on désigne communément sous l'appellation en langue anglaise « bowed rotor », ce phénomène étant d'autant plus important que l'arbre présente une longueur élevée et que la température de fonctionnement de la turbomachine augmente.

Les solutions conventionnelles pour remédier à ce phénomène consistent à rallonger le temps de démarrage de la turbomachine, la chaleur étant alors dissipée par effet de ventilation réalisée par le démarreur. De tels procédés de démarrage rallongés ne sont cependant plus acceptables au vu des contraintes imposées pour le démarrage des turbomachines, notamment en raison de l'augmentation du trafic aérien. Il est rappelé que dans le principe de la ventilation, basé sur l'évacuation des calories du moteur, la rotation de l'arbre est supérieure à 100 rotations par minute.

Les documents US 2018/010480 A1 et JP H09 222001 A divulguent des systèmes connus de l'art antérieur.

Le présent exposé vise ainsi à proposer une solution permettant de répondre au moins partiellement à cette problématique.

### Exposé de l'invention

Un mode de réalisation concerne une turbomachine selon la première revendication et comprenant entre autres un carter et un arbre mobile en rotation par rapport au carter, un système d'entrainement configuré pour entrainer l'arbre en rotation lorsque la turbomachine est à l'arrêt, un capteur configuré pour mesurer une flèche de déformation en flexion de l'arbre lorsque la turbomachine est à l'arrêt, et une unité de commande configurée, lorsque la turbomachine est à l'arrêt, pour actionner le système d'entrainement lorsque la flèche de déformation de l'arbre mesurée par le capteur est supérieure à une première valeur prédéterminée.

Un mode de réalisation selon la seconde revendication concerne un procédé de régulation de la déformation en flexion d'un arbre de turbomachine à l'arrêt soumis à la chaleur résiduelle de fonctionnement de la turbomachine, dans lequel, entre autres, on fait tourner l'arbre à une vitesse de rotation comprise entre 0,1 et 50 tours par minute uniquement lorsque la flèche est supérieure à une première valeur prédéterminé.

Par exemple, l'arbre de la turbomachine est l'arbre du corps haute pression, mais pas nécessairement. On comprend que la flèche de l'arbre est sa déformation maximale en flexion par rapport à l'axe de l'arbre. La flèche varie donc en fonction de la flexion de l'arbre. On comprend également qu'on fait tourner l'arbre autour de son axe par rapport à une partie fixe (ou statorique) de la turbomachine, par exemple le carter de la turbomachine.

En faisant tourner l'arbre pendant que la turbomachine est à l'arrêt, on homogénéise la température de l'arbre, ce qui permet de réduire et/ou maitriser, le phénomène de flexion de l'arbre par effet thermique. Par ailleurs, en régulant la rotation de l'arbre en fonction de la flèche de l'arbre, on ne peut faire tourner l'arbre que si on considère que cela est nécessaire. Ceci permet d'optimiser l'énergie consommée par le système dédié pour entrainer l'arbre en rotation lorsque la turbomachine est à l'arrêt. De plus, en tolérant une certaine flèche, donc une certaine déformation en flexion, on ne fait tourner l'arbre que lorsqu'on considère que cela est vraiment nécessaire, i.e. lorsque la flèche devient trop importante. Ceci permet d'optimiser l'énergie consommée par le système dédié pour entrainer l'arbre en rotation lorsque la turbomachine est à l'arrêt.

Dans certains modes de réalisation, on fait tourner l'arbre à une vitesse de rotation comprise entre 0,1 et 20 tours par minute, ou encore entre 0,1 et 10 tours par minute, ou entre 0,1 et 5 tours par minute, ou entre 0,1 et 2 tours par minute, ou entre 0,5 et 2 tours par minute, ou égale à 1 tour par minute.

Ces vitesses de rotation sont intéressantes pour éviter le phénomène de flexion de l'arbre par effet thermique tout en ménageant les réserves d'énergie du système dédié pour entrainer l'arbre en rotation lorsque la turbomachine est à l'arrêt.

Dans certains modes de réalisation, on arrête de faire tourner l'arbre après une première durée prédéterminée comptée à partir du moment où la flèche devient supérieure à la première valeur prédéterminée.

Dans certains cas, on peut considérer qu'après la durée prédéterminée, la température de l'arbre est suffisamment homogénéisée pour que la flèche de l'arbre soit à un niveau admissible, et on peut donc arrêter la rotation de l'arbre. Bien entendu, on peut arrêter l'arbre systématiquement après la durée prédéterminée, ou bien considérer d'autre(s) condition(s) cumulative(s), par exemple vérifier que la flèche est redevenu inférieure à la première valeur prédéterminée.

Selon l'invention, on arrête de faire tourner l'arbre lorsque la flèche est inférieure ou égale à une deuxième valeur prédéterminée, la deuxième valeur prédéterminée étant inférieure ou égale à la première valeur prédéterminée.

Lorsque la flèche est redevenue inférieure à la deuxième valeur prédéterminée, on est sûr que la flexion de l'arbre est redevenue à un niveau admissible puisque la deuxième valeur est inférieure ou égale à la première valeur prédéterminée. On peut donc arrêter la rotation de l'arbre. En fixant une deuxième valeur prédéterminée inférieure à la première valeur prédéterminée, on s'assure une certaine marge avant une éventuelle nouvelle déformation qui dépasserait le seuil admissible, grâce à quoi on préserve le système dédié pour entrainer l'arbre en rotation lorsque la turbomachine est à l'arrêt (cycles de fatigue, etc.) et les réserves d'énergie pour ce système. Par exemple, la deuxième valeur est 30% inférieure à la première valeur prédéterminée.

Selon l'invention, on arrête de faire tourner l'arbre après une deuxième durée prédéterminée à compter du moment où la flèche devient inférieure à la deuxième valeur prédéterminée.

Une telle deuxième durée prédéterminée est une temporisation, qui permet de stabiliser la valeur de la flèche par rapport à la deuxième valeur prédéterminée. Ceci renforce la stabilité de la régulation, ce qui permet de préserver le système dédié pour entrainer l'arbre en rotation lorsque la turbomachine est à l'arrêt (cycles de fatigue, etc.) et les réserves d'énergie pour ce système.

Dans certains modes de réalisation, on fait tourner l'arbre d'une course angulaire prédéterminée, par exemple 180° (i.e. undemi-tour) lorsque la flèche est supérieure à la première valeur prédéterminé.

La chaleur résiduelle de la turbomachine à l'arrêt s'accumulant essentiellement dans la partie supérieure de la turbomachine, on sait que c'est toujours la partie supérieure de l'arbre qui est soumise au plus gros flux de chaleur. En faisant tourner l'arbre d'une course angulaire prédéterminée, par exemple d'un demi-tour, on place une partie plus froide de l'arbre, par exemple la partie la plus froide de l'arbre, à l'endroit le plus chaud de la turbomachine et inversement, on place une partie plus chaude de l'arbre, par exemple la partie la plus chaude de l'arbre, à l'endroit le plus froid de la turbomachine. On homogénéise ainsi « naturellement » la température de l'arbre, avec un minimum d'intervention. Ceci permet de préserver le système dédié pour entrainer l'arbre en rotation lorsque la turbomachine est à l'arrêt (cycles de fatigue, etc.) et les réserves d'énergie pour ce système.

Dans certains modes de réalisation, on mesure la flèche, et on fait tourner l'arbre en fonction du résultat de la mesure.

La mesure de la flèche peut être directe, par exemple à l'aide d'un capteur de distance ou de variation de distance ou indirecte, par exemple à l'aide d'un capteur d'un paramètre indicateur de la flèche, comme par exemple une température à un point précis, par exemple la température de l'huile de la turbomachine, le comportement de l'arbre en fonction de la température audit point étant connu par ailleurs.

En d'autres termes, la régulation est opérée selon une boucle de contrôle fermée, la flèche étant régulièrement mesurée, et l'arbre est entrainé en rotation, ou pas, en fonction du résultat de mesure à chaque instant de mesure.

Dans certains modes de réalisation, on fait tourner l'arbre en fonction d'un modèle prévisionnel prédéterminé.

On comprend que le modèle prévisionnel prédéterminé est un modèle numérique enregistré, représentatif du comportement de l'arbre par exemple en fonction du temps écoulé depuis le moment où la turbomachine a été arrêtée, des dernières conditions de fonctionnement de la turbomachine avant son arrêt, et les conditions extérieurs (température, humidité, etc.).

En d'autres termes, la régulation est opérée selon une boucle de contrôle ouverte, la flèche étant prédite à chaque instant à partir du modèle, et l'arbre est entrainé en rotation, ou pas, en fonction de la valeur prédite de la flèche. Une telle régulation permet de s'affranchir de capteurs, ce qui simplifie le système dédié pour entrainer l'arbre en rotation lorsque la turbomachine est à l'arrêt

Un mode de réalisation concerne un programme d'ordinateur comportant les instructions pour l'exécution du procédé selon l'un quelconque des modes de réalisation décrit dans le présent exposé.

Ce programme peut utiliser n'importe quel langage de programmation, et être sous la forme de code source, code objet, ou de code intermédiaire entre le code source et le code objet, tel que dans une forme partiellement compilée, ou dans n'importe quelle autre forme souhaitable.

Un mode de réalisation concerne un support d'enregistrement lisible par ordinateur sur lequel est enregistré le programme d'ordinateur selon le présent exposé.

Le support d'enregistrement peut être n'importe quelle entité ou dispositif capable de stocker un programme. Par exemple, le support peut comporter un moyen de stockage, tel qu'une ROM, par exemple un CD-ROM ou une ROM de circuit microélectronique, ou encore un moyen d'enregistrement magnétique, par exemple une disquette (« floppy disc ») ou un disque dur.

Alternativement, le support d'enregistrement peut être un circuit intégré dans lequel le programme est incorporé, le circuit étant adapté pour exécuter ou pour être utilisé dans l'exécution du procédé en question.

### Brève description des dessins

[Fig. 1] La figure 1 est une représentation schématique d'une turbomachine.
[Fig. 2] La figure 2 représente un organigramme décrivant différentes étapes d'un procédé de régulation de la flèche selon un premier mode de réalisation.
[Fig.3] La figure 3 représente un organigramme décrivant différentes étapes d'un procédé de régulation de la flèche selon un deuxième mode de réalisation.
[Fig.4] La figure 4 représente un organigramme décrivant différentes étapes d'un procédé de régulation de la flèche selon un troisième mode de réalisation.
[Fig.5] La figure 5 représente un organigramme décrivant différentes étapes d'un procédé de régulation de la flèche selon un quatrième mode de réalisation.
[Fig.6] La figure 6 représente un organigramme décrivant différentes étapes d'un procédé de régulation de la flèche selon un cinquième mode de réalisation.

### Description des modes de réalisation

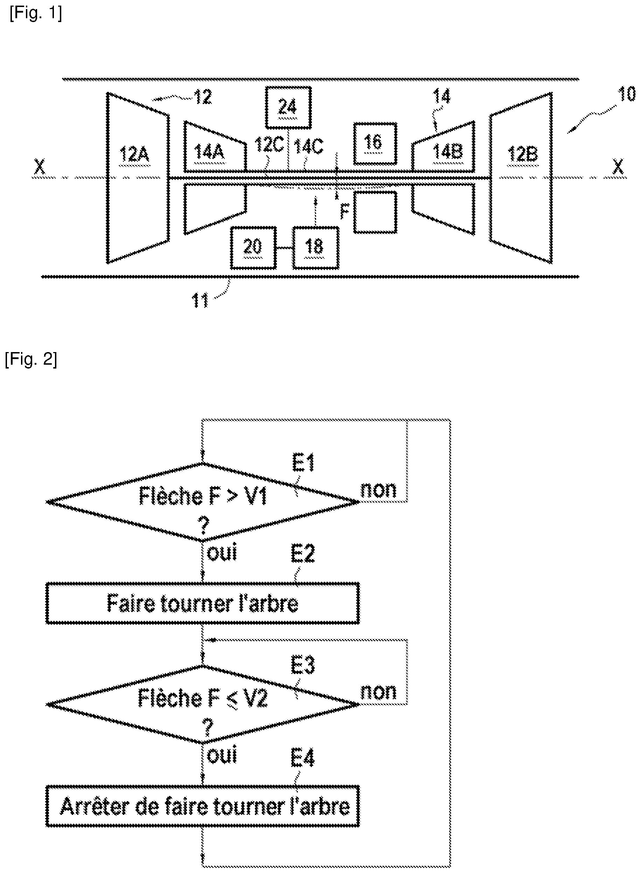

La figure 1 représente schématiquement une turbomachine 10, dans cet exemple un turboréacteur, comprenant un carter 11 logeant un corps basse pression 12, un corps haute pression 14 et une chambre de combustion 16. Le corps basse pression 12 comprend un compresseur basse pression 12A et une turbine basse pression 12B couplés en rotation par un arbre 12C. Le corps haute pression 14 comprend un compresseur haute pression 14A et une turbine haute pression 14B couplés en rotation par un arbre 14C. L'arbre 12C est coaxial à l'arbre 14C, et s'étend au travers de l'arbre 14C. Le fonctionnement de ces différents composants est bien connu, et ne sera pas décrit plus en détail ici.

Les arbres 12C et 14C sont tournants par rapport au carter 11 autour de leur axe X commun. Comme indiqué en introduction du présent exposé, ces arbres sont susceptibles de fléchir en raison de la chaleur accumulée dans la turbomachine en fonctionnement, dont la dissipation n'est pas assurée une fois la turbomachine à l'arrêt. En particulier, la flexion de l'arbre 14C se traduit par une flèche F mesurée dans cet exemple par un capteur 18. Par exemple la flèche F est de l'ordre d'une dizaine de mils (1 mils = 0.0254 mm), pour un arbre dont la longueur est comprise entre 2 m et 3 m (deux mètres et trois mètres). Un calculateur (ou unité de commande) 20 reçoit les mesures effectuées par le capteur 18 et procède à la régulation de la déformation en flexion de l'arbre 14C en fonction de la flèche F mesurée.

On comprend que le calculateur 20 comprend notamment un processeur, une mémoire vive, une mémoire morte et une mémoire flash non volatile (non représentés). La mémoire morte du calculateur 20 forme un support d'enregistrement, lisible par le processeur et sur lequel est enregistré un ou plusieurs programme(s) d'ordinateur comportant des instructions pour l'exécution des étapes du procédé de régulation de la déformation en flexion de l'arbre 14C de la turbomachine 10 décrites ci-après en référence à la figure 2.

Lorsque la turbomachine 10 est à l'arrêt, le calculateur 20 exécute le programme pour mettre en oeuvre le procédé de régulation de la déformation en flexion de l'arbre 14C, en fonction de la flèche F.

Dans l'étape E1, on mesure la flèche F de l'arbre 14C à l'aide du capteur 18. Si la flèche est supérieure à une première valeur prédéterminée V1, alors on passe à l'étape E2 et on fait tourner l'arbre 14C à une vitesse comprise entre 0,1 et 50 tours par minute. Cette rotation est effectuée par exemple par un système d'entrainement 24 embarqués au sein de la turbomachine 10, par exemple un moteur électrique, connu par ailleurs. Si la flèche est inférieure ou égale à la première valeur prédéterminée V1, alors aucune action n'est réalisée (i.e. on ne fait pas tourner l'arbre 14C), et on retourne au début de l'étape E1.

Selon une première variante, il n'y a pas de capteur 18, et le calculateur 20 a en mémoire un modèle prévisionnel représentatif du comportement de l'arbre 14C. Dans ce cas, au cours de l'étape E1 on ne mesure pas la flèche réelle, mais on détermine la valeur théorique de la flèche sur la base du modèle prévisionnel. Lorsque la flèche théorique devient supérieure à la première valeur prédéterminée V1, alors on passe à l'étape E2 et on fait tourner l'arbre 14C à une vitesse comprise entre 0,1 et 50 tours par minute. Si la flèche théorique est inférieure ou égale à la première valeur prédéterminée V1, alors aucune action n'est réalisée (i.e. on ne fait pas tourner l'arbre 14C), et on retourne au début de l'étape E1

Après qu'on ait commencé à faire tourner l'arbre 14C (étape E2), on passe à l'étape E3. Au cours de l'étape E3, on mesure la flèche F à l'aide du capteur 18 (ou selon la première variante, on estime la valeur théorique de la flèche), et on vérifie si la flèche est inférieure ou égale à une deuxième valeur prédéterminée V2, dans cet exemple inférieure à la première valeur prédéterminée V1. Si la flèche est inférieure ou égale à la deuxième valeur prédéterminée V2, alors on passe à l'étape E4 et on arrête de faire tourner l'arbre 14C. Si la flèche est supérieure à la deuxième valeur prédéterminée V2, alors aucune action n'est réalisée (i.e. on laisse tourner l'arbre 14C), et on retourne au début de l'étape E3.

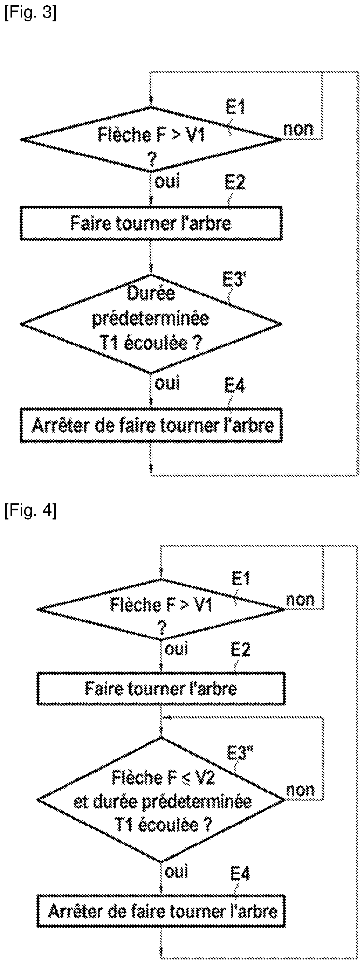

Selon une variante représenté sur la figure 3, au cours de l'étape E3', on mesure une première durée prédéterminée T1 à partir du moment où on commence à faire tourner l'arbre 14C (i.e. le moment où la flèche devient supérieure à la première valeur prédéterminée V1), puis on passe à l'étape E4 et on stoppe la rotation de l'arbre 14C au bout de la première durée prédéterminée T1, indépendamment de la valeur de la flèche. Selon une autre variante représentée sur la figure 4, on passe à l'étape E4 et on stoppe la rotation de l'arbre 14C au bout de la première durée prédéterminée T1 et lorsque la flèche est inférieure ou égale à la deuxième valeur prédéterminée V2 (voir étape E3").

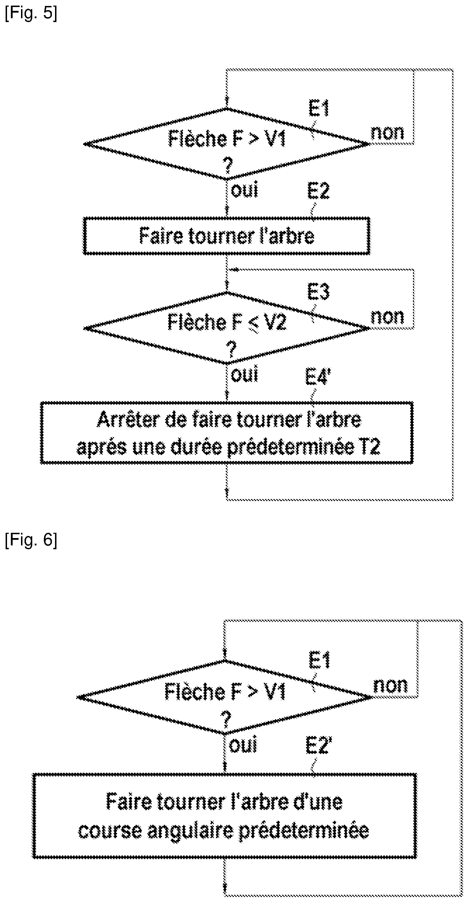

Selon encore une autre variante représentée sur le figure 5, dans l'étape E4' on arrête de faire tourner l'arbre 14C au bout d'une deuxième durée prédéterminée T2 comptée à partir du moment où la flèche devient inférieure ou égale à la deuxième valeur prédéterminée V2. Après l'étape E4, lorsqu'on arrête de faire tourner l'arbre 14C, on revient à l'étape E1.

Selon encore une autre variante représentée sur la figure 6, il n'y a pas les étapes E3 et E4, et l'arbre 14C est tourné d'une course angulaire prédéterminée, par exemple de 180°, au cours de l'étape E2'. On retient alors directement à l'étape E1 après l'étape E2'.

Bien que la présente invention ait été décrite en se référant à des modes de réalisation spécifiques, il est évident que des modifications et des changements peuvent être effectués sur ces exemples pour autant qu'ils restent dans la portée de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif. Par exemple, la description se réfère à un turboréacteur double corps double flux, mais le présent exposé est applicable à tout type de turbomachine (par exemple un turbomoteur, mais pas uniquement), de tout type de structure (par exemple simple corps simple flux, mais pas uniquement).

## Revendications

1. Turbomachine (10) comprenant un carter (11) et un arbre (14C) mobile en rotation par rapport au carter (11), un système d'entrainement (24) configuré pour entraîner l'arbre (14C) en rotation lorsque la turbomachine (10) est à l'arrêt, un capteur (18) configuré pour mesurer une flèche (F) de déformation en flexion de l'arbre (14C) lorsque la turbomachine (10) est à l'arrêt, et une unité de commande (20), la turbomachine étant **caractérisée en ce que** :
l'unité de commande (20) est configurée, lorsque la turbomachine (10) est à l'arrêt, pour actionner le système d'entrainement (24) lorsque la flèche (F) de déformation de l'arbre (14C) mesurée par le capteur (18) est supérieure à une première valeur prédéterminée (V1), et pour arrêter de faire tourner l'arbre (14C) lorsque la flèche (F) est inférieure ou égale à une deuxième valeur prédéterminée (V2), la deuxième valeur prédéterminée (V2) étant inférieure à la première valeur prédéterminée (V1), l'unité de commande (20) étant en outre configurée pour arrêter de faire tourner l'arbre (14C) après une deuxième durée prédéterminée (T2) à compter du moment où la flèche (F) devient inférieure à la deuxième valeur prédéterminée (V2).

2. Procédé de régulation de la déformation en flexion d'un arbre (14C) de turbomachine (10) à l'arrêt soumis à la chaleur résiduelle de fonctionnement de la turbomachine, dans lequel on fait tourner l'arbre (14C) à une vitesse de rotation comprise entre 0,1 et 50 tours par minute uniquement lorsque la flèche (F) est supérieure à une première valeur prédéterminée (V1), dans lequel on arrête de faire tourner l'arbre (14C) lorsque la flèche (F) est inférieure ou égale à une deuxième valeur prédéterminée (V2), la deuxième valeur prédéterminée (V2) étant inférieure à la première valeur prédéterminée (V1), dans lequel on arrête de faire tourner l'arbre (14C) après une deuxième durée prédéterminée (T2) à compter du moment où la flèche (F) devient inférieure à la deuxième valeur prédéterminée (V2).

3. Procédé selon la revendication 2, dans lequel on arrête de faire tourner l'arbre (14C) après une première durée prédéterminée (T1) comptée à partir du moment où la flèche (F) devient supérieure à la première valeur prédéterminée (V1).

4. Procédé selon la revendication 2 ou 3, dans lequel la deuxième valeur prédéterminée est inférieure à 30% de la première valeur prédéterminée.

5. Procédé selon l'une quelconque des revendications 2 à 4, dans lequel on mesure la flèche (F), et on fait tourner l'arbre (14C) en fonction du résultat de la mesure.

6. Procédé selon l'une quelconque des revendications 2 à 4, dans lequel on fait tourner l'arbre (14C) en fonction d'un modèle prévisionnel prédéterminé.

7. Programme d'ordinateur comportant les instructions pour l'exécution du procédé selon l'une quelconque des revendications 2 à 6, lorsque ledit programme est exécuté sur une unité de commande (20) pour une turbomachine selon la revendication 1.

8. Support d'enregistrement lisible par une unité de commande (20) pour une turbomachine selon la revendication 1, sur lequel est enregistré le programme d'ordinateur selon la revendication 7.

## Patentansprüche

1. Turbomaschine (10), umfassend ein Gehäuse (11) und eine in Bezug auf das Gehäuse (11) drehbewegliche Welle (14C), ein Antriebssystem (24), das dazu ausgestaltet ist, die Welle (14C) zum Drehen anzutreiben, wenn sich die Turbomaschine (10) im Ruhezustand befindet, einen Sensor (18), der dazu ausgestaltet ist, eine Durchbiegung (F) bei einer Biegeverformung der Welle (14C) zu messen, wenn sich die Turbomaschine (10) im Ruhezustand befindet, und eine Steuereinheit (20), wobei die Turbomaschine, **dadurch gekennzeichnet ist, dass**:
die Steuereinheit (20) dazu ausgestaltet ist, wenn sich die Turbomaschine (10) im Ruhezustand befindet, das Antriebssystem (24) zu betätigen, wenn die durch den Sensor (18) gemessene Durchbiegung (F) bei der Verformung der Welle (14C) größer als ein erster vorbestimmter Wert (V1) ist, und die Welle (14C) sich nicht mehr drehen zu lassen, wenn die Durchbiegung (F) kleiner oder gleich einem zweiten vorbestimmten Wert (V2) ist, wobei der zweite vorbestimmte Wert (V2) kleiner als der erste vorbestimmte Wert (V1) ist, wobei die Steuereinheit (20) ferner dazu ausgestaltet ist, die Welle (14C) sich nach einer zweiten vorbestimmten Dauer (T2) ab dem Zeitpunkt, zu dem die Durchbiegung (F) kleiner als der zweite vorbestimmte Wert (V2) wird, nicht mehr drehen zu lassen.

2. Verfahren zur Regelung der Biegeverformung einer Welle (14C) einer Turbomaschine (10) im Ruhezustand unter Einfluss der Restwärme des Turbomaschinenbetriebs, wobei man die Welle (14C) sich nur dann mit einer Drehzahl zwischen 0,1 und 50 Umdrehungen pro Minute drehen lässt, wenn die Durchbiegung (F) größer als ein erster vorbestimmter Wert (V1) ist, wobei man die Welle (14C) sich nicht mehr drehen lässt, wenn die Durchbiegung (F) kleiner oder gleich einem zweiten vorbestimmten Wert (V2) ist, wobei der zweite vorbestimmte Wert (V2) kleiner als der erste vorbestimmte Wert (V1) ist, wobei man die Welle (14C) sich nach einer zweiten vorbestimmten Dauer (T2) ab dem Zeitpunkt, zu dem die Durchbiegung (F) kleiner als der zweite vorbestimmte Wert (V2) wird, nicht mehr drehen lässt.

3. Verfahren nach Anspruch 2, wobei man die Welle (14C) sich nach einer ersten vorbestimmten Dauer (T1) ab dem Zeitpunkt, zu dem die Durchbiegung (F) größer als der erste vorbestimmte Wert (V1) wird, nicht mehr drehen lässt.

4. Verfahren nach Anspruch 2 oder 3, wobei der zweite vorbestimmte Wert kleiner als 30 % des ersten vorbestimmten Werts ist.

5. Verfahren nach einem der Ansprüche 2 bis 4, wobei die Durchbiegung (F) gemessen wird und man sich die Welle (14C) in Abhängigkeit des Messergebnisses drehen lässt.

6. Verfahren nach einem der Ansprüche 2 bis 4, wobei man sich die Welle (14C) in Abhängigkeit eines vorbestimmten Vorhersagemodels drehen lässt.

7. Computerprogramm, umfassend die Anweisungen zur Ausführung des Verfahrens nach einem der Ansprüche 2 bis 6, wobei das Programm auf einer Steuereinheit (20) für eine Turbomaschine nach Anspruch 1 durchgeführt wird.

8. Speichermedium, das durch eine Steuereinheit (20) für eine Turbomaschine nach Anspruch 1 lesbar ist und auf dem das Computerprogramm nach Anspruch 7 gespeichert ist.

## Claims

1. A turbomachine (10) comprising a casing (11) and a shaft (14C) that is movable in rotation with respect to the casing (11), a drive system (24) configured to drive the shaft (14C) in rotation when the turbomachine (10) is at rest, a sensor (18) configured to measure a bending deformation deflection (F) of the shaft (14C) when the turbomachine (10) is at rest, and a control unit (20), the turbomachine being **characterized in that**:
the control unit (20) is configured, when the turbomachine (10) is at rest, to actuate the drive system (24) when the deformation deflection (F) of the shaft (14C) measured by the sensor (18) is greater than a first predetermined value (V1), and to stop rotating the shaft (14C) when the deflection (F) is less than or equal to a second predetermined value (V2), the second predetermined value (V2) being less than the first predetermined value (V1), the control unit (20) further being configured to stop rotating the shaft (14C) after a second predetermined period (T2) counted from the time where the deflection (F) becomes smaller than the second predetermined value (V2).

2. A method for controlling the bending deformation of a turbomachine (10) shaft (14C) at rest subjected to the residual heat of operation of the turbomachine, wherein the shaft (14C) is rotated at a rotation speed comprised between 0.1 and 50 revolutions per minute only when the deflection (F) is greater than a first predetermined value (V1), wherein rotating the shaft (14C) is stopped when the deflection (F) is less than or equal to a second predetermined value (V2), the second predetermined value (V2) being less than the first predetermined value (V1), wherein rotating the shaft is stopped (14C) after a second predetermined period (T2) counted from the time where the deflection (F) becomes less than the second predetermined value (V2).

3. The method according to claim 2, wherein rotating the shaft (14C) is stopped after a first predetermined period (T1) counted from the time where the deflection (F) becomes greater than the first predetermined value (V1).

4. The method according to claim 2 or 3, wherein the second predetermined value is less than 30% of the first predetermined value.

5. The method according to any one of claims 2 to 4, wherein the deflection (F) is measured, and the shaft (14C) is rotated depending on the result of the measurement.

6. The method according to any one of claims 2 to 4, wherein the shaft (14C) is rotated depending on a predetermined predictive model.

7. A computer program including instructions for the execution of the method according to any one of claims 2 to 6, when said program is executed on a control unit (20) for a turbomachine according to claim 1.

8. A recording medium readable by a control unit (20) for a turbomachine according to claim 1, on which the computer program according to claim 7 is recorded.
